**Europäisches Patentamt**

**European Patent Office**

**Office européen des brevets**

(19)

(11) Veröffentlichungsnummer: **0 082 442**
**B1**

(12) **EUROPÄISCHE PATENTSCHRIFT**

(45) Veröffentlichungstag der Patentschrift:
**10.08.88**

(21) Anmeldenummer: **82111472.5**

(22) Anmeldetag: **10.12.82**

(51) Int. Cl.⁴: **G 01 B 5/00**

(54) **Messmaschine in Portalbauweise.**

(30) Priorität: **23.12.81 DE 3150978**

(43) Veröffentlichungstag der Anmeldung:
**29.06.83 Patentblatt 83/26**

(45) Bekanntmachung des Hinweises auf die Patenterteilung:
**10.08.88 Patentblatt 88/32**

(84) Benannte Vertragsstaaten:
**CH DE FR GB IT LI SE**

(56) Entgegenhaltungen:
**DE-A-3 037 741**
**DE-B-2 718 506**
**FR-A-2 110 626**
**GB-A-807 994**
**US-A-3 840 993**

(73) Patentinhaber: **Firma Carl Zeiss, D-7920
Heidenheim (Brenz) (DE)**

(72) Erfinder: **Herzog, Klaus, Kopernikusstrasse 42,
D-7082 Oberkochen (DE)**

EP 0 082 442 B1

Beschreibung

Bei bekannten Meßmaschinen in Portalbauweise ist die Seitenführung des Portals in einen oder beide Füße des Portals gelegt. Sofern es sich dabei um handbediente Maschinen handelt, erfolgt der Antrieb des Meßtasters durch einen an der Z-Pinole angebrachten Handgriff, der von der Bedienperson ergriffen wird und über den die Bewegung der Maschine in allen drei Achsen eingeleitet wird.

Derartige Meßmaschinen sind in ihrer Genauigkeit beschränkt, da selbst bei sorgfältiger Ausgestaltung der Führungen bei der Bewegung der Maschine Biegemomente insbesondere auf das Portal und die Pinole ausgeübt werden, deren Größe abhängig von der momentanen Stellung des Meßkopfes und den von der Bedienperson aufgebrachten Beschleunigungs- bzw. Verzögerungskräften ist. Eine Versteifung des Portals ist nur bis zu einem gewissen Grade möglich, da dies zusätzliche Massen erfordert, deren Beschleunigung und Abbremsung selbst Verbiegungen des Portals hervorrufen. Außerdem wird die Handhabung der Maschine umso schlechter je größer die zu bewegenden Massen sind.

Biegekräfte treten auch bei motorisch angetriebenen Maschinen auf, wenn der Antrieb nicht exakt im Massenschwerpunkt der Verschiebeschlitten angreift.

Aus der DE-B-27 18 506 sind Meßmaschinen in Portalbauweise bekannt geworden, deren Portal über einen am Brückenteil des Portals in der Nähe seines Schwerpunkts angreifenden Antrieb bewegt wird. Durch diese Art des Antriebs werden zwar die auf das Portal einwirkenden Querkräfte im Vergleich zum einseitigem Antrieb verringert, aber nicht völlig beseitigt, da sich der Schwerpunkt im Gegensatz zum Angriffspunkt des Antriebs am Portal je nach Stellung des Querschlittens verlagert. Da auch bei der letztgenannten Meßmaschine die Seitenführung des Portals in einen der beiden Füße des Portals gelegt ist, können ebenfalls Verbiegungen des Portals auftreten.

Aus der FR-A-2110626 ist eine Koordinatenmeßmaschine in Portalbauweise bekannt, die eine Einrichtung zur Ermittlung von Führungsfehlern des Portals besitzt. Ermittelt wird die Rollwinkelbewegung, die das Portal ausführt, indem die vertikalen Abstände der beiden Portalfüße von der Granitplatte des Geräts durch dazu angebaute Meßfühler bestimmt werden. Die Signale der Meßfühler dienen dazu, den Luftdruck und damit die Größe des Lagerspaltes der das Portal tragenden Luftlager so zu steuern, daß das Portal exakt ausgerichtet bleibt.

In der GB-A-807994 ist eine Bearbeitungsmaschine beschrieben, die mit Einrichtungen zur Ermittlung von Führungsfehlern, auch Abweichungen der Seitenführung des beweglichen Werkstücktisches von einer Bezugslinie versehen ist. Auch hier dienen die Signale der Meßfühler, mit denen die Abweichungen ermittelt werden dazu, die korrekte Lage über die Antriebe der Maschine wiederherzustellen.

Es ist die Aufgabe der vorliegenden Erfindung, eine Meßmaschine in Portalbauweise mit geringen bewegten Massen zu schaffen, bei der mechanische Deformationen hervorgerufen durch nicht im Massenschwerpunkt angreifende Antriebskräfte minimiert sind und ohne Einfluß auf die Meßgenauigkeit bleiben.

Diese Aufgabe wird erfindungsgemäß durch die kennzeichnenden Merkmale des Anspruchs 1 gelöst.

Da bei diesem Aufbau die Kraftangriffspunkte des Portals (Antrieb, Schwerpunkt, Führung) sehr nahe beieinander, etwa in gleicher Höhe liegen, können Biegekräfte nur bezüglich der Seitenführung des Portals auftreten, das sich jedoch nicht selbst verbiegt sondern aufgrund von Lagerdeformationen und Ebenheitsabweichungen der Seitenführung lediglich Seitenversatz erfährt und kleine Drehungen um die Z-Achse ausführt.

Diese Führungsfehler lassen sich aber meßtechnisch mit relativ geringem Aufwand erfassen, beispielsweise durch die in der gleichzeitig eingereichten und am selben Tag wie die Anmeldung veröffentlichen Patentanmeldung EP-A-0 082 441 der Anmelderin mit dem Titel "Verfahren und Einrichtung zur Ermittlung und Korrektur von Führungsfehlern" beschriebenen Maßnahmen.

An das im Gehäuse angeordnete Lager für die Seitenführung sind im übrigen keine hohen Anforderungen gestellt, so daß dieses relativ wenig aufwendig ausgeführt sein kann.

Vorzugsweise enthält die Einrichtung zur Ermittlung der Führungsfehler, um die das Meßergebnis zu korrigieren ist, zwei Meßtaster, die an einem Fuß des Portals befestigt sind und an einer sich in Verschieberichtung (x) des Portals erstreckenden Bezugsfläche gleiten. Mit dieser Meßeinrichtung läßt sich sowohl der Versatz des Portals als auch seine Drehung um die Z-Achse erfassen.

In der Ausführung als handbediente Maschine ist es zweckmäßig den Betätigungsgriff an dem längs des Brückenteils des Portals verschieblichen Schlitten zu befestigen und für die Z-Pinole einen separaten, vorzugsweise motorischen Antrieb vorzusehen. Auf diese Weise werden Verbiegungen der Pinole vermieden, die demzufolge besonders leichtgewichtig ausgebildet werden kann.

Soll die Meßmaschine in allen Achsen einen motorischen Antrieb besitzen, so wird der Antrieb für das Portal zweckmäßig in dem die Seitenführungslager des Portals enthaltenden Gehäuse untergebracht und kann vorzugsweise über Reibrollen auf die Führungsschiene wirken.

Nachstehend ist ein Ausführungsbeispiel anhand der Fig. 1-3 der beigefügten Zeichnungen beschrieben.

Fig. 1    zeigt eine erfindungsgemäße Portalmeßmaschine in Seitenansicht;

Fig. 2    zeigt die gleiche Maschine in Aufsicht;

Fig. 3    stellt eine detailliertere Schnittzeichnung längs der Linie III-III in Fig. 2 bei geändertem Maßstab dar.

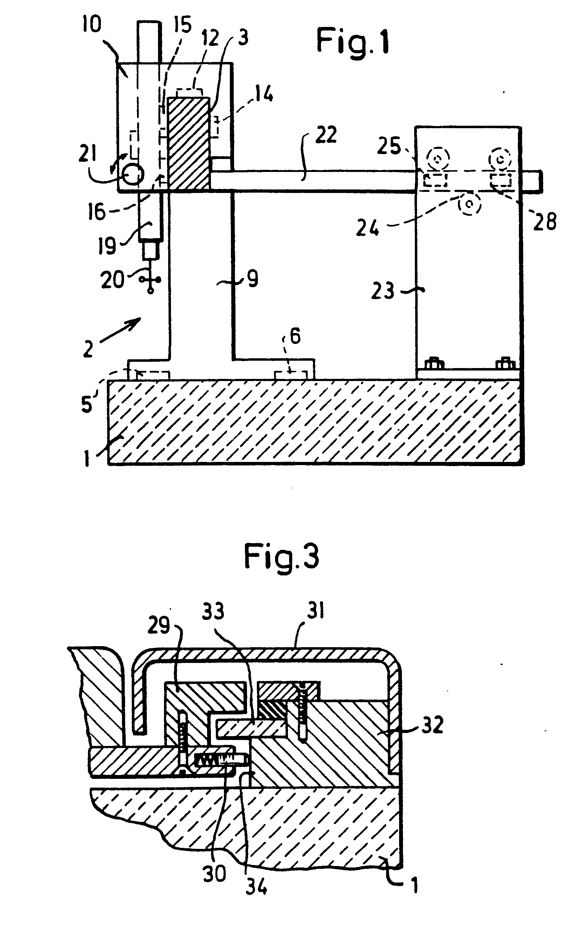

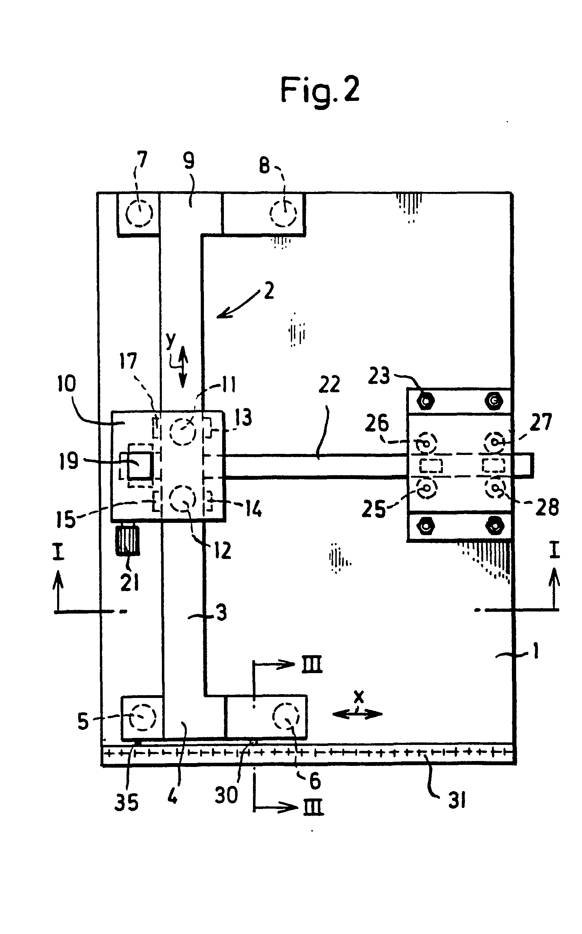

Die in den Fig. 1 und 2 dargestellte Meßmaschine besitzt eine Grundplatte 1 z. B aus Granit, auf deren ebener Oberfläche das Portal 2 aufgesetzt ist. Das Portal wird von zwei Säulen 4 und 9 und dem Brückenteil 3 gebildet. In die Füße der Säulen 4,9 sind je ein paar Luftlager 5,6 und 7,8 integriert, mit deren Hilfe das Portal 2 auf der Grundplatte 1 gleitet.

Das Brückenteil 3 dient dem y-Schlitten 10 als Führung, der von dem Luftlagerpaar 11/12 getragen und von den Luftlagern 13-17 gegen Verdrehung bzw. Verkippung gesichert ist. Der y-Schlitten 10 enthält die nicht näher bezeichneten Lager zur Führung der senkrecht bewegbaren z-Pinole 19, die den Tastkopf 20 trägt, sowie einen motorischen Antrieb für die Pinole 19. Sowohl beim y-Schlitten als auch bei der z-Pinole handelt es sich um gängige Baugruppen, die keiner näheren Erläuterung bedürfen.

Hinter dem Portal 2 ist an vier in die Grundplatte 1 eingelassenen Gewindebolzen ein Gehäuse 23 aufgeschraubt. Das Gehäuse 23 enthält vier Rollenlager 25-28 zur Seitenführung einer in der Mitte am Brückenteil 3 starr befestigten Führungsschiene 22 und außerdem ein weiteres Lager 24, das das Gewicht der Führungsschiene 22 aufnimmt. Die Lager 25-28 stellen die Führung des Portals 2 in x-Richtung sicher.

In der hier gezeigten einfachsten Ausführungsform besitzt die Meßmaschine einen am Schlitten 10 befestigten Handgriff 21, mit dem die Maschine in den zwei Achsen x und y manuell verfahren werden kann. Der Handgriff ist mit einem Schalter gekoppelt, über den der nicht dargestellte Elektroantrieb für die z-Pinole durch Drehen des Griffes geschaltet wird. Selbstverständlich ist es ohne Schwierigkeiten möglich, die Maschine auch in den Achsen x und y motorisch anzutreiben. Den Antrieb für das Portal 2 (x-Achse) wird man dann zweckmäßigerweise in das Gehäuse 23 integrieren und beispielsweise über Reibrollen auf die Führungsschiene 22 wirken lassen.

Wie in Fig. 3 detailliert dargestellt ist, ist an einer auf die Grundplatte 1 aufgesetzten, sich in Verschieberichtung des Portals erstreckenden Leiste 32 ein Glasmaßstab 33 befestigt. Dieser Glasmaßstab wird von einem optoelektronischen Index bekannter Bauart (nicht dargestellt) abgelesen, der an dem mit dem Fuß der Säule 4 verbundenen Teil 29 befestigt ist. Eine Abdeckung 31 schützt den Maßstab 33 und die Meßsysteme gegen Schmutz und Fremdlicht.

Da die Steifigkeit und Ebenheit der Führungsschiene 22 gering ist, können als Folge zwei Führungsfehler des Portals 2 auftreten:

1. Versatz des Portals 2 in y.
2. Drehung des Portals um seinen Schwerpunkt.

Um die Auswirkungen dieser Fehlermöglichkeiten auf das Meßergebnis zu eliminieren, sind an dem den Index zur Ablesung des Maßstabs 33 tragenden Teil 29 des Portals 2 zwei zusätzliche Meßtaster 30 und 35 bekannter Bauart, z. B. Induktivtaster, befestigt, deren Taststifte an der Fläche 34 der Leiste 32 gleiten. Wie Fig. 2 zeigt sind die Taster 30 und 35 in einem Abstand in x-Richtung voneinander entfernt angeordnet.

Die Ausgänge der Meßtaster sind mit dem Rechner der Meßmaschine verbunden, dem auch die Ausgangssignale der Meßsysteme der drei Achsen der Maschine zugeführt werden. Bei der Berechnung der Antastkoordinaten jedes von dem Taster 20 angefahrenen Meßpunktes werden die x- und y-Koordinaten dann gemäß der vorhandenen Schieflage und versetzung des Portals korrigiert.

Dabei berechnet sich der Versatz in y aus der Summe der Meßwerte der Zusatztaster 30 und 35 während sich die Schieflage bzw. Drehung des Portals um die Vertikale aus der Differenz der Meßwerte der Taster 30 und 35 und ihrem Abstand berechnet.

Diese Fehlerkorrektur impliziert, daß die Fläche 34, an die die Taster 30 und 35 gleiten, über den Meßbereich der Maschine in x-Richtung hinreichend eben ist und exakt parallel zur Meßachse ausgerichtet ist. Falls diese Voraussetzungen fehlen oder aus Gründen des Fertigungsaufwandes nicht einzuhalten sind, besteht die Möglichkeit die Abweichungen der Fläche 34 von der Maschinenachse zu messen und in Form einer Korrekturfunktion im Rechner zu speichern, wie es ebenfalls in der unveröffentlichten Patentanmeldung der Anmelderin mit dem Titel "Verfahren und Einrichtung zur Ermittlung und Korrektur von Führungsfehlern" beschrieben ist.

**Patentansprüche**

1. Meßmaschine in Portalbauweise mit einer Einrichtung (29-35) zur Ermittlung von Führungsfehlern des Portals, dadurch gekennzeichnet, daß die Seitenführung des Portals (2) durch eine an das Brückenteil (3) des Portals (2) angesetzte Führungsschiene (22) erfolgt, die in einem an der Grundplatte (1) der Maschine befestigten, separaten Gehäuse (23) gelagert ist, und daß die Einrichtung (29-35) die seitlichen Abweichungen des Portals von einer sich in Führungsrichtung (x) des Portals (2) erstreckenden Bezugslinie mißt.

2. Meßmaschine nach Anspruch 1, dadurch gekennzeichnet, daß die Einrichtung zur Ermittlung von Führungsfehlern zwei Meßtaster (30, 35) enthält, die an einem Fuß des Portals (2) befestigt sind und an einer Bezugsfläche (34) gleiten.

3. Meßmaschine nach Anspruch 1, dadurch gekennzeichnet, daß die Füße des Portals (2) direkt auf der ebenen Grundplatte (1) gleiten.

4. Meßmaschine nach Anspruch 1, dadurch gekennzeichnet, daß der Antrieb des Portals (2) und des längs des Brückenteils (3) verschiebbaren Schlittens (10) von Hand über einen am Schlitten (10) befestigten Griff (21) erfolgt.

5. Meßmaschine nach Anspruch 4, dadurch gekennzeichnet, daß der Handgriff (21) etwa in Höhe des Schwerpunkts des Portals (2) am Schlitten (10) angebracht ist.

6. Meßmaschine nach Anspruch 4, dadurch gekennzeichnet, daß der Antrieb der im Schlitten (10) senkrecht verschiebbar gelagerten Pinole (19) motorisch erfolgt und der Griff (21) mit einem Schalter für den Antriebsmotor der Pinole (19) versehen ist.

7. Meßmaschine nach Anspruch 1, dadurch gekennzeichnet, daß ein motorischer Antrieb des Portals (2) im Gehäuse (23) untergebracht ist und vorzugsweise über Reibrollen auf die Führungsschiene (22) wirkt.

## Claims

1. A measuring machine of the portal type, having a device (29-35) for determining guidance errors of the portal, characterized by the fact that lateral constraint of the portal (2) is effected by a guide rail (22) attached to the bridge part (3) of the portal (2), said rail having guided support in a separate housing (23) mounted to the base plate (1) of the machine, and that the device (29-35) determines lateral deviations from a reference line extending in the direction of guidance (x) of the portal.

2. A measuring machine according to claim 1, characterized by the fact that said device for determining guidance errors comprises two measurement probes (30, 35) carried by one foot of the portal (2) and in slidable engagement with a reference surface (34).

3. A measuring machine according to claim 1, characterized by the fact that the feet of the portal (2) slide directly on a flat base plate (1).

4. A measuring machine according to claim 1, characterized by the fact that the drive of the portal (2) and the drive of the carriage (10) which is displaceable along the bridge part (3) is effected manually via an operating knob (21) which is mounted to the carriage (10).

5. A measuring machine according to claim 4, characterized by the fact that the operating knob (21) is arranged on the carriage (10) approximately at the elevation of the center of gravity of the portal (2).

6. A measuring machine according to claim 4, characterized by the fact that the drive of the spindle (19) which is supported for vertical displacement in the carriage (10) is effected by motor power, and the knob (21) is provided with switch means for control of the drive motor of the measurement spindle (19).

7. A measuring machine according to claim 1, characterized by the fact that a motor drive for the portal (2) is arranged in the housing (23) and acts on the guide rail (22), preferably via friction rollers.

## Revendications

1. Machine de mesure de type à portique, comprenant un dispositif (29-35) pour relever des défauts de guidage du portique, caractérisée en ce que le guidage latéral du portique (2) est réalisé au moyen d'un rail de guidage (22) rapporté à la partie en pont (3) du portique (2), rail qui est monté mobile et supporté dans un boîtier (23) séparé, et que ledit dispositif (29-35) mesure les écarts latéraux du portique par rapport à une ligne de référence s'étendant dans la direction de guidage (x) du portique (2).

2. Machine selon la revendication 1, caractérisée en ce que le dispositif pour relever les défauts de guidage contient deux palpeurs (30, 35) fixés à un pied du portique (2) et glissant sur une surface de référence (34).

3. Machine selon la revendication 1, caractérisée en ce que les pieds du portique (2) glissent directement sur une plaque de base (1) plane.

4. Machine selon la revendication 1, caracterisée en ce que l'entraînement du portique (2) et du chariot (10), déplaçable le long de la partie en pont (3), s'effectue manuellement à l'aide d'une poignée (21) fixée au chariot (10).

5. Machine selon la revendication 4, caractérisée en ce que la poignée (21) est fixée à peu près à la hauteur du centre de gravité du portique (2) sur le chariot (10).

6. Machine selon la revendication 4, caractérisée en ce que l'entraînement du fourreau de broche (19), monté déplaçable verticalement dans le chariot (10), est produit par un moteur et que la poignée (21) est munie d'un interrupteur pour la commande du moteur d'entraînement du fourreau de broche (19).

7. Machine selon la revendication 1, caractérisée en ce qu'un entraînement par moteur du portique (2) est logé dans le boîtier (23) et agit sur le rail de guidage (22), de préférence par l'intermédiaire de galets de friction.

# Fig.1

# Fig.3

# Fig. 2